# EUROPEAN PATENT SPECIFICATION

(11) **EP 4 652 554 B1**
(45) Date of publication and mention of the grant of the patent: **16.09.2026**
(21) Application number: 23821710.3
(22) Date of filing: 05.12.2023
(51) Int. Cl.: G06Q 10/0631, G05B 19/042, G06Q 50/06

(54) **LAYERED CONTROL SYSTEM FOR MANAGEMENT OF A DISTRIBUTED ENERGY STORAGE, DES, SYSTEM**
SCHICHTSTEUERUNGSSYSTEM ZUR VERWALTUNG EINES VERTEILTEN ENERGIESPEICHER-DES-SYSTEMS
SYSTÈME DE COMMANDE EN COUCHES POUR LA GESTION D'UN SYSTÈME DE STOCKAGE D'ÉNERGIE DISTRIBUÉE, SED

(30) Priority: 07.03.2023 FI 20235264
(43) Date of publication of application: 26.11.2025
(73) Proprietor: Elisa Oyj, 00520 Helsinki (FI)
(72) Inventor: SALMENKAITA, Jukka-Pekka, 00520 Helsinki (FI); KOKKO, Hannu, 00520 Helsinki (FI); HOLMBACKA, Simon, 00520 Helsinki (FI)
(74) Representative: Espatent Oy
(86) International application number: PCT/FI2023/050665
(87) International publication number: WO 2024/184578

(56) References cited:
- EP-A1- 3 975 369
- WO-A1-2021/113819
- US-A1- 2020 150 706
- LIN LIN ET AL: "Deep Reinforcement Learning for Economic Dispatch of Virtual Power Plant in Internet of Energy", IEEE INTERNET OF THINGS JOURNAL, IEEE, USA, vol. 7, no. 7, 12 January 2020 (2020-01-12), pages 6288 - 6301, XP011798227, [retrieved on 20200709], DOI: 10.1109/JIOT.2020.2966232

## Description

### TECHNICAL FIELD

The present disclosure generally relates to management of distributed energy storage, DES, systems.

### BACKGROUND

This section illustrates useful background information without admission of any technique described herein representative of the state of the art.

A distributed energy storage (DES) system is a pool of spatially distributed nodes controlled by a centralized control system. The nodes may be distributed over a vast geographical area. The nodes can be powered either by the electric grid or by a battery unit connected to the node. The battery units may be resources maintained for example for emergency energy backup purposes, such as backup batteries of a wireless communication network. Additionally or alternatively, the battery units may be resources owned by households or small and medium sized companies or other smaller scale operators. The battery units of a DES system can be used for forming a virtual power plant (VPP) comprising a plurality of spatially distributed nodes. In this way a larger capacity may be built by pooling together smaller scale resources. As backup batteries are not constantly used, the battery units of the nodes of the DES can be used for further optimization purposes e.g. through the VPP. Such VPPs may participate in balancing of electric grid or in intraday trading market. Transmission system operators (TSO) offer reserve markets where reserve providers, such as VPP, can offer energy capacity for grid balancing purposes.

WO 2021/113819 A1 discloses a layered control system to aggregate distributed energy resources.

Now, there are provided some new considerations concerning management of distributed energy storage systems for the purpose of enabling participation in balancing of electric grid.

### SUMMARY

The appended claims define the scope of protection. Any examples and technical descriptions of apparatuses, products and/or methods in the description and/or drawings not covered by the claims are presented not as embodiments of the invention but as background art or examples useful for understanding the invention.

According to a first example aspect there is provided a layered control system for managing a distributed energy storage, DES, system. The DES system comprises a plurality of nodes, each node comprising one or more battery units. The layered control system comprises a first control layer, a second control layer and a third control layer; wherein
the first control layer is configured to
   - determine in advance an operating plan for the DES system for a plurality of time slots of a first time period based on aggregated properties of the DES system, wherein the operating plan comprises allocation of aggregated capacity of the DES system for the plurality of time slots, and
   - convey the operating plan to the second control layer;
the second control layer is configured to
   - determine rules for selecting nodes of the DES system for obtaining the allocated aggregated capacity of the operating plan;
   - monitor operation of the DES system in real time and responsively adjust the rules; and
   - convey the rules to the third control layer; and
the third control layer is configured to
   - execute selection and activation of individual nodes of the DES system in accordance with the rules.

In some example embodiments, the layered control system further comprises a third interface between the first control layer and the second control layer for conveying the operating plan to the second control layer.

In some example embodiments, the layered control system further comprises a fourth interface between the second control layer and the third control layer for conveying the rules to the third control layer.

In some example embodiments, the layered control system further comprises a first interface between the third control layer and the nodes of the DES system for interacting with the nodes of the DES system.

In some example embodiments, the first control layer is configured to convey the operating plan to the second control layer together with information about expected state of the DES system.

In some example embodiments, the first control layer is configured to optimize the operating plan in view of a predefined operating objective, history of available aggregated capacity of the DES system, and information relating to reserve market of electric grids.

In some example embodiments, the operating plan determined by the first control layer is used for bidding energy capacity in a reserve market of electric grids.

In some example embodiments, the rules determined by the second control layer prioritize nodes of the DES system in view of operating conditions of the nodes, wherein the operating conditions comprise one or more of: state of charge of battery units of the nodes, state of health of battery units of the nodes, temperature, local energy consumption, local energy production.

In some example embodiments, the second control layer is further configured to compare real time operation of the DES system to the operating plan and responsive to detecting that execution of the operating plan is at risk, to adjust the operating plan.

In some example embodiments, the rules determined by the second control layer concern individual nodes or groups of nodes.

In some example embodiments, the third control layer executes the selection and activation of individual nodes of the DES system responsive to an activation need of a reserve market of electric grids until the activation need is fulfilled.

In some example embodiments, the first control layer is implemented in a cloud computing environment, and the second control layer and the third control layer are implemented in a runtime system in a local server.

In some example embodiments, the third control layer is implemented in execution threads.

According to a second example aspect of the present invention, there is provided a computer implemented method comprising
using a layered control system for managing a distributed energy storage, DES, system, wherein the DES system comprises a plurality of nodes, each node comprising one or more battery units;
wherein the layered control system comprises a first control layer, a second control layer and a third control layer; the method comprising:
   performing in the first control layer
      - determining in advance an operating plan for the DES system for a plurality of time slots of a first time period based on aggregated properties of the DES system, wherein the operating plan comprises allocation of aggregated capacity of the DES system for the plurality of time slots, and
      - conveying the operating plan to the second control layer;
   performing in the second control layer
      - determining rules for selecting nodes of the DES arrangement for obtaining the allocated aggregated capacity;
      - monitoring operation of the DES arrangement in real time and responsively adjusting the rules; and
      - conveying the rules to the third control layer;
   performing in the third control layer
      - executing selection and activation of individual nodes of the DES arrangement in accordance with the rules.

The computer implemented method may further provide features of example embodiments listed above in connection with the first example aspect.

According to a third example aspect of the present invention, there is provided an apparatus comprising means for performing the method of the second aspect or any related embodiment. The means may comprise a processor and a memory including computer program code, and wherein the memory and the computer program code are configured to, with the processor, cause the performance of the apparatus.

According to a fourth example aspect of the present invention, there is provided a computer program comprising computer executable program code which when executed by a processor causes an apparatus to perform the method of the second aspect or any related embodiment.

According to a fifth example aspect there is provided a computer program product comprising a non-transitory computer readable medium having the computer program of the third example aspect stored thereon.

Any foregoing memory medium may comprise a digital data storage such as a data disc or diskette; optical storage; magnetic storage; holographic storage; opto-magnetic storage; phase-change memory; resistive random-access memory; magnetic random-access memory; solid-electrolyte memory; ferroelectric random-access memory; organic memory; or polymer memory. The memory medium may be formed into a device without other substantial functions than storing memory or it may be formed as part of a device with other functions, including but not limited to a memory of a computer; a chip set; and a sub assembly of an electronic device.

Different non-binding example aspects and embodiments have been illustrated in the foregoing. The embodiments in the foregoing are used merely to explain selected aspects or steps that may be utilized in different implementations. Some embodiments may be presented only with reference to certain example aspects. It should be appreciated that corresponding embodiments may apply to other example aspects as well.

### BRIEF DESCRIPTION OF THE FIGURES

Some example embodiments will be described with reference to the accompanying figures, in which:
Fig. 1 schematically shows a system according to an example embodiment;
Fig. 2 shows a block diagram of an apparatus according to an example embodiment; and
Fig. 3 shows logical components of an arrangement according to an example embodiment.

### DETAILED DESCRIPTION

In the following description, like reference signs denote like elements or steps.

Various embodiments of present disclosure provide mechanisms to manage a distributed energy storage, DES, system, wherein the DES system comprises a plurality of nodes. The nodes are spatially distributed entities that can be powered either by the electric grid or by a battery unit connected to the node. The battery units may be resources maintained for example for emergency energy backup purposes, such as backup batteries of a wireless communication network. Additionally or alternatively, the battery units may be resources owned by households or small and medium sized companies or other smaller scale operators. As an alternative non-limiting example, the battery units may be intended for storing energy from local renewable sources such as solar panels and/or wind generators or even from a fuel-operated genset. As yet another alternative or additional non-limiting example, the intended use of the battery units is optimization of self-consumption. The node may be a hybrid system using multiple energy sources.

In general, the battery units in this disclosure refer to battery units that are able to handle regular charge and discharge cycles. For example, lithium based batteries are such battery units. In more detail, one or more of the following battery technologies may be represented in the DES nodes: lithium-nickel-cobalt, NCA, lithium-iron-phosphate, LFP, lithium-nickel-manganese-cobalt, NMC, flow batteries, and solid-state batteries. The battery units may have different properties with regard to price, durability, physical size and wear depending for example on the battery technology and storage capacity.

In general, lithium based batteries should not regularly exceed extreme low or high charge values. For example, state of charge below 5% or above 95% should be avoided. Such limitations should be taken into account in usage of the lithium-ion batteries to avoid increased wear of the batteries.

Battery units of a DES system can be used for forming a virtual power plant (VPP) comprising a plurality of spatially distributed nodes. In this way a larger capacity may be built by pooling together smaller scale resources. The battery units of the nodes can be used for temporarily feeding energy to the electric grid to balance the electric grid and/or for temporarily storing surplus energy from the electric grid to balance the electric grid and/or for further optimization purposes through the VPP.

Such VPPs may participate in balancing of electric grid or in intraday trading market. Transmission system operators (TSO) offer reserve markets where reserve providers, such as VPPs, can offer energy capacity for grid balancing purposes.

Frequency balancing of electric grid may be arranged for example using automatic Frequency Restoration Reserve, aFRR, or Frequency Containment Reserve, FCR, capacity market. aFRR is a centralized automatically activated reserve. Its activation is based on a power change signal calculated on the basis of the frequency deviation in the Nordic synchronized area. Its purpose is to return the frequency to the nominal value. FCR is an active power reserve that is automatically controlled based on the frequency deviation. FCR may be Frequency Containment Reserve for Normal Operation, FCR-N, or Frequency Containment Reserve for Disturbances, FCR-D. Their purpose is to contain the frequency during normal operation and disturbances.

The frequency balancing may comprise up regulation and/or down regulation. Up regulation means increasing power production or decreasing consumption. For up regulation the battery units of the DES system may be arranged to feed energy to the electric grid. Down regulation means decreasing power production or increasing consumption. For down regulation, the battery units of the DES system may be arranged to store energy from the electric grid.

In order to participate in the grid balancing, the DES nodes need to be activated upon detecting a balancing need. The balancing need may be automatically detected or the balancing need may be signalled in a balancing request. The balancing need may relate to up regulation or down regulation.

Various embodiments of present disclosure provide a centralized control system for managing a DES system so that the DES system can be used for participating in frequency balancing of electric grid e.g. in the aFRR and/or FCR capacity market and/or for further optimization purposes such as optimizing state of charge of the battery units of the DES system or load shifting in the DES system. Such control task is not a straightforward problem to solve as there are multiple stochastic features that need to be considered. There are likely thousands of individual battery units with individual and heterogenous properties with regard to capacity, power characteristics, current state etc. Grid balancing needs and actual activations vary and e.g. backup capacity requirement may emerge suddenly. Therefore a multitude of factors need to be taken into account to efficiently optimize control of the DES system. In various embodiments of present disclosure, there is provided a centralized control system that comprises a layer structure comprising three layers that interact with each other as will be explained later in this document. By the layer structure the control task can be divided into separate individual control modules.

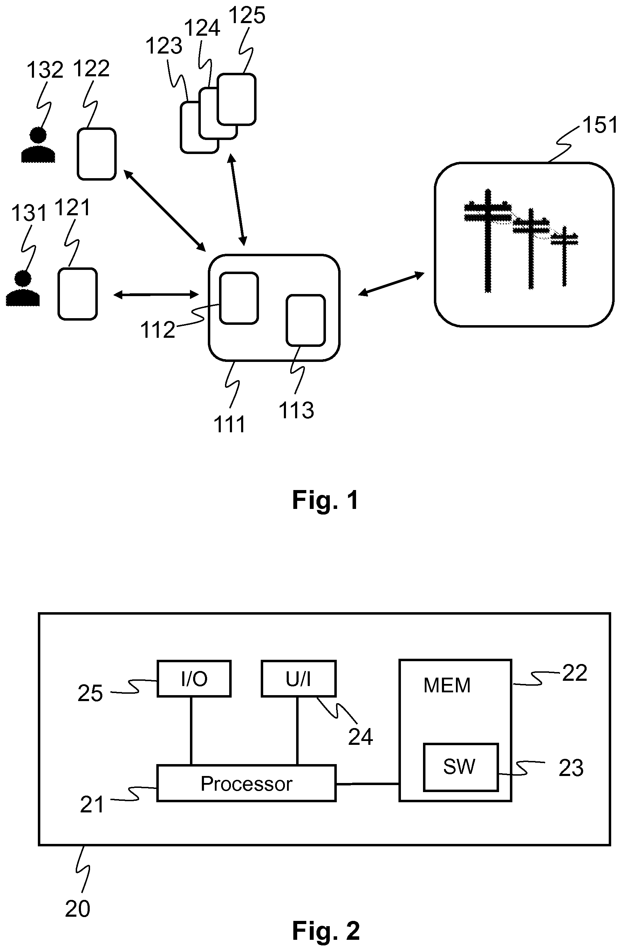

Fig. 1 schematically shows an example scenario according to an embodiment. The scenario shows a DES system formed of nodes 121-125, each including one or more battery units. The nodes 121-125 may be located at different geographical locations, but equally there may be plurality of nodes at the same location. Fig. 1 shows the nodes 123-125 at the same location and the nodes 121 and 122 individually at different locations. The nodes 121 and 122 are owned by individuals 131 and 132, respectively. The nodes 123-125 are co-located nodes owned for example by a small company. In practice, each node may have individual IP address to enable remote control of the nodes. In an example, co-located nodes may require multiple co-located IP addresses for sending control messages to the nodes. Alternatively, co-located nodes may be controlled through one IP address that can be used for distributing control messages to the co-located nodes. The battery units of the nodes 121-125 may be intended for emergency backup purposes, but this is not mandatory. In an example embodiment, the battery units of the nodes are backup batteries of a wireless communication network. In another example embodiment, the battery units of the nodes are battery units of households or battery units of buildings. In an example embodiment, the nodes are co-located with an energy production unit, such as solar or wind farm. It is to be noted that this is only a non-limiting illustrative example and in practical implementations many different setups are possible.

Further, the scenario shows a control system 111. The control system 111 may control the nodes 121-125 of the DES system to operate as a virtual power plant. Still further, Fig. 1 shows an electric grid 151.

The control system 111 is configured to implement at least some example embodiments of present disclosure to manage the nodes 121-125 of the DES system. For this purpose, the control system 111 is operable to interact with the nodes 121-125, with the battery units of the nodes 121-125, and/or equipment associated thereto. The control system 111 comprises a first interface 112 for such interaction. Communication over the first interface 112 is implemented for example using Simple Network Management Protocol (SNMP). Additionally, the control system 111 is operable to interact with the electric grid 151 or equipment associated thereto to coordinate participation in frequency balancing of the electric grid. The control system 111 comprises a second interface 113 for this purpose.

The operator of the DES system may receive compensation based on the frequency balancing carried out for the electric grid. The compensation may depend on actual activation of frequency balancing and/or on reserving capacity for the possible frequency balancing needs. Further, there may be penalty, if the DES system fails to fulfil the frequency balancing commitments. The DES system may fail to fulfil the frequency balancing commitment by not being able to activate enough capacity in up or down direction and/or by not being able perform the necessary activations fast enough. In general, there may be an incentive to fulfil the commitments made. Sometimes failing to fulfil the commitments made may be acceptable, though. For example, if it is clear, it is not possible to fully fulfil the commitment, it may be chosen not to activate at all. In principle, it may be considered that it is better to activate 0% of the resources and fail than to activate 80% of the resources and fail.

Fig. 2 shows a block diagram of an apparatus 20 according to an embodiment. The apparatus 20 is for example a general purpose computer, cloud computing environment or some other electronic data processing apparatus. The apparatus 20 can be used for implementing at least some embodiments of present disclosure. That is, with suitable configuration the apparatus 20 is suited for operating for example as the control system 111 of Fig. 1.

The apparatus 20 comprises a communication interface 25; a processor 21; a user interface 24; and a memory 22. The apparatus 20 further comprises software 23 stored in the memory 22 and operable to be loaded into and executed in the processor 21. The software 23 may comprise one or more software modules and can be in the form of a computer program product.

The processor 21 may comprise a central processing unit (CPU), a microprocessor, a digital signal processor (DSP), a graphics processing unit, or the like. Fig. 2 shows one processor 21, but the apparatus 20 may comprise a plurality of processors.

The user interface 24 is configured for providing interaction with a user of the apparatus. Additionally or alternatively, the user interaction may be implemented through the communication interface 25. The user interface 24 may comprise a circuitry for receiving input from a user of the apparatus 20, e.g., via a keyboard, graphical user interface shown on the display of the apparatus 20, speech recognition circuitry, or an accessory device, such as a headset, and for providing output to the user via, e.g., a graphical user interface or a loudspeaker.

The memory 22 may comprise for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The apparatus 20 may comprise a plurality of memories. The memory 22 may serve the sole purpose of storing data, or be constructed as a part of an apparatus 20 serving other purposes, such as processing data.

The communication interface 25 may comprise communication modules that implement data transmission to and from the apparatus 20. The communication modules may comprise a wireless or a wired interface module(s) or both. The wireless interface may comprise such as a WLAN, Bluetooth, infrared (IR), radio frequency identification (RF ID), GSM/GPRS, CDMA, WCDMA, LTE (Long Term Evolution) or 5G radio module. The wired interface may comprise such as Ethernet or universal serial bus (USB), for example. The communication interface 25 may support one or more different communication technologies. The apparatus 20 may additionally or alternatively comprise more than one of the communication interfaces 25.

A skilled person appreciates that in addition to the elements shown in Fig. 2, the apparatus 20 may comprise other elements, such as displays, as well as additional circuitry such as memory chips, application-specific integrated circuits (ASIC), other processing circuitry for specific purposes and the like.

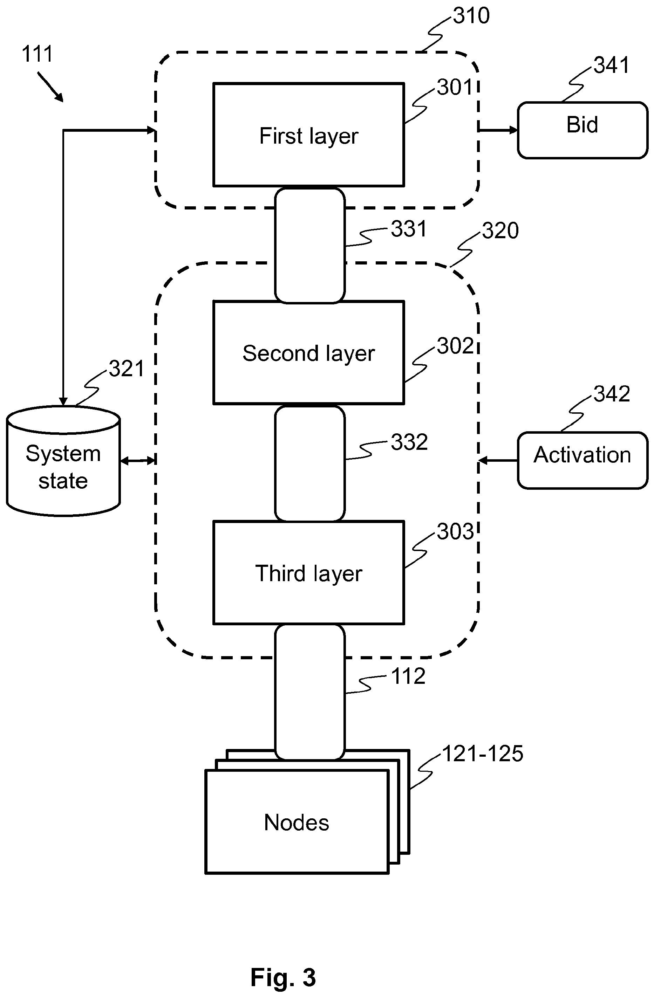

Fig. 3 shows logical components of an arrangement according to an example embodiment.

The arrangement of Fig. 3 comprises a control system 111 and a plurality of nodes 121-125 of a DES system. The control system 111 comprises a first control layer 301, a second control layer 302, a third control layer 303, and a storage for system state information 321. Further, the control system 111 comprises a first interface 112 between the third control layer 303 and the nodes 121-125 of the DES system, a third interface 331 between the first control layer 301 and the second control layer 302, a fourth interface 332 between the second control layer 302 and the third control layer 303. Still further there may be a second interface (not shown) in the control system 111 for interaction with systems related to electric grid.

The first control layer may be implemented in a cloud computing environment, and the second control layer and the third control layer may be implemented in a runtime system on a local server. These may be in physically different places, but this is not mandatory. In an embodiment the second control layer and the third control layer are running close to the nodes 121-125 whereas the first control layer may run without contact to the nodes 121-125.

The third control layer may be implemented in lightweight threads for fast parallel execution.

The first interface 112 may be for example an IP interface that uses SNMP protocol for communication. The third interface 331 and the fourth interface 332 may be any suitable communication interfaces between different logical or physical data processing elements. The third interface 331 and the fourth interface 332 may be at least partially implemented by transferring information between the control layers through a suitable intermediate storage.

The first control layer 301 is responsible for determining in advance an operating plan for the DES system for a plurality of time slots of a first time period. The operating plan is determined for example for the next day in 60 min, 30 min or 15 min increments, but this is clearly only an example.

The first control layer 301 determines the operating plan based on aggregated properties of the DES system. That is, the first control layer 301 considers the multitude of battery units and nodes of the DES system as one unit.

The first control layer 301 may optimize the operating plan in view of a predefined operating objective, history of available aggregated capacity of the DES system, and information relating to reserve market of electric grids. Also other information, such as weather information, may be used. The first control layer 301 may take into account losses due to aggregation of the capacity in comparison to ideal aggregated capacity without any losses. For this reason, the first control layer 301 may use effectiveness multipliers. Further the operating plan may be configured to include certainty factors depending on how certain the determination of the first control layer 301 is considered to be.

The first control layer 301 may operate as a standalone solution in the sense that no or very little feedback is in general needed in real time from the real DES system.

The first control layer 301 may use machine learning tools, complex optimization tools or the like for determining the operating plan. Such tools may require relatively large amount of processing capacity, but as the operating plan is determined in advance, this is acceptable. In an embodiment the first control layer may simulate multiple operating plans and their effects in order to decide on which operating plan to choose.

The resulting operating plan comprises allocation of aggregated capacity of the DES system for the plurality of time slots. The allocation may concern for example upregulation, downregulation, and/or load shifting. Load shifting herein refers to charging or discharging the battery units to reach certain aggregated capacity level for the DES system and/or to shift energy or power between time slots. Further the operating plan may be accompanied with information about expected state (including e.g. soc level or the like) of the DES system.

The operating plan is conveyed to the second control layer 302 through the third interface 331. In practice, this may be implemented so that there is a storage for the operating plan and the second control layer 303 reads the operating plan from the storage when needed. The storage may be for example the storage 321 of Fig. 3.

The operating plan determined by the first control layer 301 is used for submitting a bid 341 of energy or power capacity in a reserve market of electric grids. In an embodiment, the operating plan is only confirmed, if the bid is accepted, and the confirmed operating plan is conveyed to the second control layer 302. If the bid is not accepted, the operating plan is not necessarily conveyed to the second control layer.

It is to be noted that even though the bid is accepted in this phase, it is not yet known whether the allocated capacities defined in the bid will be actually activated during the forthcoming first time period.

The following lists some non-exclusive examples of determination of the operating plan by the first control layer 301:
- The first control layer 301 reads aFRR activation and price history, and a spot price forecast. The first control layer 301 uses heuristics to place bids on aFRR up/down and load shifting for the next day. The operating plan is decided based on acceptable of the bids.
- The first control layer 301 reads aFRR activation and price history, and a spot price forecast. The first control layer 301 uses NLP optimization to determine optimized operating plan for the next day.
- The first control layer 301 reads aFRR activation and price history, and a spot price forecast. The first control layer 301 uses NLP optimization to generate one possible schedule and then uses a simulator to simulate 1000 different outcomes of the next day's schedule based on parameter settings. The first control layer 301 picks the best settings and associated operating plan.
- Geographical calculations. The first control layer 301 assesses one or more of: the weather risk at sites in the area (how much weather conditions may affect reliability of the grid), known and set geographical limitations or optimizations (how fast possible failures are likely to be fixed), geographical known disturbances (power break schedules), geographical known price optimizations (local transfer price) and takes these into account in determining the operating plan.

The second control layer 302 receives the operating plan through the third interface 331.

The second control layer 302 is responsible for determining principles according to which the individual battery units or nodes of the DES system are selected for fulfilling the planned aggregated capacity when the operating plan is in use. To achieve this, the second control layer 302 determines rules for selecting nodes of the DES system for obtaining the allocated aggregated capacity. Further the second control layer 302 monitors status of the DES system in real time while the operating plan is in use and responsively adjusts the rules if needed. Adjustments may be needed for example if the state of the DES system differs from the expected state provided by the first control layer 301 and/or if adjustments are needed for ensuring expected operation of the DES system and/or if status of individual nodes or battery units requires adjustments. The rules may be adjusted in terms of minutes or hours, for example.

The rules determined by the second control layer may prioritize nodes of the DES system in view of operating conditions of the nodes. The operating conditions comprise for example one or more of: state of charge of battery units of the nodes, state of health of battery units of the nodes, temperature, local energy consumption, local energy production. The rules may determine priority order to be used in selecting individual nodes, the rules may define state or properties of the nodes that are to be used as a basis for the selection, and/or the rules may blacklist certain nodes (in order to prevent selection of those nodes). The blacklisting may be associated to certain type of activation and may thus concern only upregulation or downregulation, for example.

The rules determined by the second control layer may concern individual nodes or groups of nodes.

The second control layer 302 conveys the rules for use in the third control layer 303 through the fourth interface 332. In practice, this may be implemented so that there is a storage for the rules and the third control layer 303 reads the rules from the storage when needed.

In an embodiment, the second control layer 302 compares real time operation of the DES system to the operating plan. If it is detected that execution of the operating plan is at risk, i.e. that there is a risk of not being able to operate the DES system as planned, the second control layer 302 may adjust the operating plan.

The following lists some non-exclusive examples of operation of the second control layer 302 and the rules determined by the second control layer:
- The second control layer 302 reads SoC from all nodes. The average SoC is 90% (very high). The second control layer 302 will adjust the rules to allow SoC levels up to 100%.
- The second control layer 302 reads SoC from all nodes. The average SoC is 50% (normal). The second control layer 302 will adjust the rules to allow SoC levels up to 90% (it is not allowed to exceed 90%).
- The second control layer 302 notices very low system power in a certain area of the country during certain time of day. The second control layer 302 will adjust the rules to promote these nodes to be selected for downregulation/down activation.
- The second control layer 302 notices high temperatures in certain parts of the country. The second control layer 302 will adjust the rules to refrain from using these nodes unless necessary.

The third control layer 303 is responsible for interacting with the nodes 121-125 of the DES system. Upon receiving activation 342 of allocated capacity, the third control layer 303 executes selection and activation of individual nodes of the DES system in accordance with the rules from the second control layer 302. This is performed through the first interface 112. The third control layer 303 may activate the nodes of the DES system until current activation need is fulfilled. It is to be noted that this is the phase, where the capacity of the nodes is actually taken into use for the grid balancing purposes. That is, the activation command or request 342 is needed for this.

The third control layer 303 executes simple heuristics based on the rules from the second control layer 302 and state of the nodes of the DES system, such as "select nodes with high SoC first for up regulation, select nodes with low SoC first for down regulation". It is also possible that the third control layer selects nodes according to a single 'priority' field where the priority order has been pre-determined by the second control layer. State of the nodes of the DES system is continuously updated to the storage for system state information 321 in order to provide real time or near real time state information. It is to be noted that the information stored in the storage for system state information 321 is usable by the first control layer 301, too, but the first control layer 301 does not require real time access to the state information. The first control layer 301 may for example read history of SoC statistics from the storage 321 and adjust forthcoming operating plans and energy/power biddings accordingly.

The following lists some non-exclusive examples of operation of the third control layer 303:
- An activation signal of +1 MW (i.e. up regulation) is received. The third control layer 303 reads parameters of nodes e.g. from local database such as the storage 321. The third control layer 303 orders the nodes of the DES system according to the rules by keys *highest SoC* first and secondarily *highest Power consumption.* The third control layer 303 selects enough nodes to achieve +1 MW.
- An activation signal of -1 MW (i.e. down regulation) is received. The third control layer 303 reads parameters of nodes e.g. from local database such as the storage 321. The third control layer 303 orders the nodes according to keys *lowest SoC* first and secondarily *Highest power capacity.* The third control layer 303 selects enough nodes to achieve -1 MW.
- The third control layer 303 knows the latest activation signal and has a feedback mechanism for keeping enough activation by monitoring the current state of the system and adding or subtracting nodes if the activation in nodes does not correspond to latest activation signal.

Without in any way limiting the scope, interpretation, or application of the appended claims, a technical effect of one or more of the example embodiments disclosed herein is improved management of a DES system or a virtual power plant, VPP. Various embodiments help taking into account the heterogeneous characteristics of the nodes and battery units of the DES system in a close to real-time manner. By the layered control arrangement of various embodiments it is possible to divide the control responsibilities into different layers depending on the type of control problem.

Further effects achieved by at least some embodiments include modularity and ability to make changes in certain control modules without affecting others, transparency and ability make real time adjustments to lower level control actions near the controlled devices. The modularity provides that changes in some hierarchy levels (or layers) of the control system do not necessarily require any changes in other hierarchy levels (or layers) of the control arrangement. In this way it is easier to implement development and ongoing adjustment of the control arrangement.

A further effect achieved with various embodiments is that the first or the highest control layer may control the DES system as one big unit without needing to take into account different and possibly diverging characteristics of individual nodes and battery units of the DES system.

Any of the afore described methods, method steps, or combinations thereof, may be controlled or performed using hardware; software; firmware; or any combination thereof. The software and/or hardware may be local; distributed; centralised; virtualised; or any combination thereof. Moreover, any form of computing, including computational intelligence, may be used for controlling or performing any of the afore described methods, method steps, or combinations thereof. Computational intelligence may refer to, for example, any of artificial intelligence; neural networks; fuzzy logics; machine learning; genetic algorithms; evolutionary computation; or any combination thereof.

Various embodiments have been presented. It should be appreciated that in this document, words comprise; include; and contain are each used as open-ended expressions with no intended exclusivity.

The foregoing description has provided by way of non-limiting examples of particular implementations and embodiments a full and informative description of the best mode presently contemplated by the inventors for carrying out the invention.

Furthermore, some of the features of the afore-disclosed example embodiments may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A layered control system for managing a distributed energy storage, DES, system, wherein the DES system comprises a plurality of nodes (121-125), each node comprising one or more battery units; wherein
the layered control system comprises a first control layer (301), a second control layer (302) and a third control layer (303), wherein the first control layer is implemented in a cloud computing environment, and the second control layer and the third control layer are implemented in a runtime system in a local server; wherein
the first control layer (301) is configured to
- determine in advance an operating plan for the DES system for a plurality of time slots of a first time period based on aggregated properties of the DES system, wherein the operating plan comprises allocation of aggregated capacity of the DES system for the plurality of time slots, and
- convey the operating plan to the second control layer;
the second control layer (302) is configured to
- determine rules for selecting nodes of the DES system for obtaining the allocated aggregated capacity of the operating plan;
- monitor operation of the DES system in real time and responsively adjust the rules; and
- convey the rules to the third control layer; and
the third control layer (303) is configured to
- execute selection and activation of individual nodes of the DES system in accordance with the rules.

2. The layered control system of claim 1, further comprising a third interface (331) between the first control layer (301) and the second control layer (302) for conveying the operating plan to the second control layer.

3. The layered control system of claim 1 or 2, further comprising a fourth interface (332) between the second control layer (302) and the third control layer (303) for conveying the rules to the third control layer.

4. The layered control system of any preceding claim, further comprising a first interface (112) between the third control layer (304) and the nodes (121-125) of the DES system for interacting with the nodes (121-125) of the DES system.

5. The layered control system of any preceding claim, wherein the first control layer is configured to convey the operating plan to the second control layer together with information about expected state of the DES system.

6. The layered control system of any preceding claim, wherein the first control layer is configured to optimize the operating plan in view of a predefined operating objective, history of available aggregated capacity of the DES system, and information relating to reserve market of electric grids.

7. The layered control system of any preceding claim, wherein the operating plan determined by the first control layer is used for bidding energy capacity in a reserve market of electric grids.

8. The layered control system of any preceding claim, wherein the rules determined by the second control layer prioritize nodes of the DES system in view of operating conditions of the nodes, wherein the operating conditions comprise one or more of: state of charge of battery units of the nodes, state of health of battery units of the nodes, temperature, local energy consumption, local energy production.

9. The method of any preceding claim, wherein the second control layer (302) is further configured to compare real time operation of the DES system to the operating plan and responsive to detecting that execution of the operating plan is at risk, to adjust the operating plan.

10. The layered control system of any preceding claim, wherein the rules determined by the second control layer concern individual nodes or groups of nodes.

11. The layered control system of any preceding claim, wherein the third control layer executes the selection and activation of individual nodes of the DES system responsive to an activation need of a reserve market of electric grids until the activation need is fulfilled.

12. The layered control system of any preceding claim, wherein the third control layer is implemented in execution threads.

13. A computer implemented method comprising
using a layered control system for managing a distributed energy storage, DES, system, wherein the DES system comprises a plurality of nodes (121-125), each node comprising one or more battery units;
wherein the layered control system comprises a first control layer (301), a second control layer (302) and a third control layer (303), wherein the first control layer is implemented in a cloud computing environment, and the second control layer and the third control layer are implemented in a runtime system in a local server; the method comprising:
performing in the first control layer
- determining in advance an operating plan for the DES system for a plurality of time slots of a first time period based on aggregated properties of the DES system, wherein the operating plan comprises allocation of aggregated capacity of the DES system for the plurality of time slots, and
- conveying the operating plan to the second control layer;
performing in the second control layer
- determining rules for selecting nodes of the DES arrangement for obtaining the allocated aggregated capacity;
- monitoring operation of the DES arrangement in real time and responsively adjusting the rules; and
- conveying the rules to the third control layer;
performing in the third control layer
- executing selection and activation of individual nodes of the DES arrangement in accordance with the rules.

14. A computer program comprising computer executable program code (23) for causing an apparatus to perform the method of claim 13.

## Patentansprüche

1. Mehrschichtiges Steuerungssystem zur Verwaltung eines verteilten Energiespeichersystems, DES-System, wobei das DES-System mehrere Knoten (121-125) umfasst, wobei jeder Knoten eine oder mehrere Batterieeinheiten umfasst; wobei
das mehrschichtige Steuerungssystem eine erste Steuerungsschicht (301), eine zweite Steuerungsschicht (302) und eine dritte Steuerungsschicht (303) umfasst, wobei die erste Steuerungsschicht in einer Cloud-Rechenumgebung implementiert ist und die zweite Steuerungsschicht und die dritte Steuerungsschicht in einem Laufzeitsystem auf einem lokalen Server implementiert sind; wobei
die erste Steuerungsschicht (301) dazu ausgelegt ist,
- im Voraus einen Betriebsplan für das DES-System für mehrere Zeitschlitze eines ersten Zeitraums auf Grundlage aggregierter Eigenschaften des DES-Systems zu bestimmen, wobei der Betriebsplan eine Zuweisung von aggregierter Kapazität des DES-Systems für die mehreren Zeitschlitze umfasst, und
- den Betriebsplan an die zweite Steuerungsschicht weiterzuleiten;
die zweite Steuerungsschicht (302) dazu ausgelegt ist,
- Regeln zum Auswählen von Knoten des DES-Systems zu bestimmen, um die zugewiesene aggregierte Kapazität des Betriebsplans zu ermitteln;
- den Betrieb des DES-Systems in Echtzeit zu überwachen und die Regeln reaktiv anzupassen; und
- die Regeln an die dritte Steuerungsschicht weiterzuleiten; und
die dritte Steuerungsschicht (303) dazu ausgelegt ist,
- die Auswahl und Aktivierung einzelner Knoten des DES-Systems in Übereinstimmung mit den Regeln auszuführen.

2. Mehrschichtiges Steuerungssystem nach Anspruch 1, ferner umfassend eine dritte Schnittstelle (331) zwischen der ersten Steuerungsschicht (301) und der zweiten Steuerungsschicht (302) zum Weiterleiten des Betriebsplans an die zweite Steuerungsschicht.

3. Mehrschichtiges Steuerungssystem nach Anspruch 1 oder 2, ferner umfassend eine vierte Schnittstelle (332) zwischen der zweiten Steuerungsschicht (302) und der dritten Steuerungsschicht (303) zum Weiterleiten der Regeln an die dritte Steuerungsschicht.

4. Mehrschichtiges Steuerungssystem nach einem vorhergehenden Anspruch, ferner umfassend eine erste Schnittstelle (112) zwischen der dritten Steuerungsschicht (304) und den Knoten (121-125) des DES-Systems zur Interaktion mit den Knoten (121-125) des DES-Systems.

5. Mehrschichtiges Steuerungssystem nach einem vorhergehenden Anspruch, wobei die erste Steuerungsschicht dazu ausgelegt ist, den Betriebsplan zusammen mit Informationen über den erwarteten Zustand des DES-Systems an die zweite Steuerungsschicht weiterzuleiten.

6. Mehrschichtiges Steuerungssystem nach einem vorhergehenden Anspruch, wobei die erste Steuerungsschicht dazu ausgelegt ist, den Betriebsplan unter Berücksichtigung eines vordefinierten Betriebsziels, einer Historie einer verfügbaren aggregierten Kapazität des DES-Systems sowie von Informationen zum Reservemarkt von Stromnetzen zu optimieren.

7. Mehrschichtiges Steuerungssystem nach einem vorhergehenden Anspruch, wobei der von der ersten Steuerungsschicht bestimmte Betriebsplan für das Anbieten von Energiekapazität in einem Reservemarkt von Stromnetzen verwendet wird.

8. Mehrschichtiges Steuerungssystem nach einem vorhergehenden Anspruch, wobei die von der zweiten Steuerungsschicht bestimmten Regeln Knoten des DES-Systems unter Berücksichtigung von Betriebsbedingungen der Knoten priorisieren, wobei die Betriebsbedingungen eines oder mehreres von Folgendem umfassen: Ladezustand von Batterieeinheiten der Knoten, Gesundheitszustand von Batterieeinheiten der Knoten, Temperatur, lokaler Energieverbrauch, lokale Energieerzeugung.

9. Verfahren nach einem vorhergehenden Anspruch, wobei die zweite Steuerungsschicht (302) ferner dazu ausgelegt ist, den Echtzeitbetrieb des DES-Systems mit dem Betriebsplan zu vergleichen und in Reaktion auf eine Feststellung, dass die Ausführung des Betriebsplans gefährdet ist, den Betriebsplan anzupassen.

10. Mehrschichtiges Steuerungssystem nach einem vorhergehenden Anspruch, wobei die von der zweiten Steuerungsschicht bestimmten Regeln einzelne Knoten oder Gruppen von Knoten betreffen.

11. Mehrschichtiges Steuerungssystem nach einem vorhergehenden Anspruch, wobei die dritte Steuerungsschicht die Auswahl und Aktivierung einzelner Knoten des DES-Systems in Reaktion auf einen Aktivierungsbedarf eines Reservemarktes von Stromnetzen ausführt, bis der Aktivierungsbedarf gedeckt ist.

12. Mehrschichtiges Steuerungssystem nach einem vorhergehenden Anspruch, wobei die dritte Steuerungsschicht in Ausführungssträngen implementiert ist.

13. Computerimplementiertes Verfahren umfassend:
Verwenden eines mehrschichtigen Steuerungssystems zur Verwaltung eines verteilten Energiespeichersystems, DES-System, wobei das DES-System mehrere Knoten (121-125) umfasst, wobei jeder Knoten eine oder mehrere Batterieeinheiten umfasst;
wobei das mehrschichtige Steuerungssystem eine erste Steuerungsschicht (301), eine zweite Steuerungsschicht (302) und eine dritte Steuerungsschicht (303) umfasst, wobei die erste Steuerungsschicht in einer Cloud-Rechenumgebung implementiert ist und die zweite Steuerungsschicht und die dritte Steuerungsschicht in einem Laufzeitsystem auf einem lokalen Server implementiert sind; wobei das Verfahren umfasst:
Ausführung in der ersten Steuerungsschicht
- im Voraus Bestimmen eines Betriebsplans für das DES-System für mehrere Zeitschlitze eines ersten Zeitraums auf Grundlage aggregierter Eigenschaften des DES-Systems, wobei der Betriebsplan eine Zuweisung von aggregierter Kapazität des DES-Systems für die mehreren Zeitschlitze umfasst, und
- Weiterleiten des Betriebsplans an die zweite Steuerungsschicht;
Ausführung in der zweiten Steuerungsschicht
- Bestimmen von Regeln für das Auswählen von Knoten der DES-Anordnung zur Ermittlung der zugewiesenen aggregierten Kapazität;
- Überwachen des Betriebs der DES-Anordnung in Echtzeit und reaktives Anpassen der Regeln; und
- Weiterleiten der Regeln an die dritte Steuerungsschicht;
Ausführung in der dritten Steuerungsschicht
- Ausführen der Auswahl und Aktivierung einzelner Knoten der DES-Anordnung in Übereinstimmung mit den Regeln.

14. Computerprogramm, das einen computerausführbaren Programmcode (23) umfasst, um eine Vorrichtung zur Durchführung des Verfahrens nach Anspruch 13 zu veranlassen.

## Revendications

1. Système de commande multicouche pour la gestion d'un système de stockage d'énergie distribué, DES, dans lequel le système DES comprend plusieurs nœuds (121-125), chaque nœud comprenant une ou plusieurs unités de batterie; dans lequel
le système de commande multicouche comprend une première couche de commande (301), une deuxième couche de commande (302) et une troisième couche de commande (303), la première couche de commande étant mise en œuvre dans un environnement de calcul en nuage, et la deuxième couche de commande et la troisième couche de commande étant mises en œuvre dans un système de runtime sur un serveur local; dans lequel
la première couche de commande (301) est configurée pour
- déterminer par avance un plan opérationnel pour le système DES pour plusieurs créneaux de temps d'une première période de temps sur la base de propriétés agrégées du système DES, le plan opérationnel comprenant une allocation de capacité agrégée du système DES pour lesdits plusieurs créneaux de temps, et
- relayer le plan opérationnel à la deuxième couche de commande;
la deuxième couche de commande (302) est configurée pour
- déterminer des règles pour la sélection de nœuds du système DES afin d'obtenir la capacité agrégée allouée du plan opérationnel;
- surveiller en temps réel le fonctionnement du système DES et ajuster les règles de manière réactive; et
- relayer les règles à la troisième couche de commande; et
la troisième couche de commande (303) est configurée pour
- exécuter la sélection et l'activation de nœuds individuels du système DES conformément aux règles.

2. Système de commande multicouche selon la revendication 1, comprenant également une troisième interface (331) entre la première couche de commande (301) et la deuxième couche de commande (302) pour relayer le plan opérationnel à la deuxième couche de commande.

3. Système de commande multicouche selon la revendication 1 ou 2, comprenant également une quatrième interface (332) entre la deuxième couche de commande (302) et la troisième couche de commande (303) pour relayer les règles à la troisième couche de commande.

4. Système de commande multicouche selon une revendication précédente quelconque, comprenant également une première interface (112) entre la troisième couche de commande (304) et les nœuds (121-125) du système DES pour interagir avec les nœuds (121-125) du système DES.

5. Système de commande multicouche selon une revendication précédente quelconque, dans lequel la première couche de commande est configurée pour relayer le plan opérationnel à la deuxième couche de commande ensemble avec des informations sur l'état attendu du système DES.

6. Système de commande multicouche selon une revendication précédente quelconque, dans lequel la première couche de commande est configurée pour optimiser le plan opérationnel en vue d'un objectif opérationnel prédéfini, d'une historique de la capacité agrégée disponible du système DES et d'informations relatives au marché de réserve de réseaux électriques.

7. Système de commande multicouche selon une revendication précédente quelconque, dans lequel le plan opérationnel déterminé par la première couche de commande est utilisé pour offrir une capacité énergétique dans un marché de réserve de réseaux électriques.

8. Système de commande multicouche selon une revendication précédente quelconque, dans lequel les règles déterminées par la deuxième couche de commande priorisent des nœuds du système DES en vue de conditions de fonctionnement des nœuds, les conditions de fonctionnement comprenant l'un ou plusieurs parmi : l'état de charge des unités de batterie des nœuds, l'état de santé des unités de batterie des nœuds, la température, la consommation énergétique locale, la production énergétique locale.

9. Procédé selon une revendication précédente quelconque, dans lequel la deuxième couche de commande (302) est également configurée pour comparer le fonctionnement en temps réel du système DES avec le plan opérationnel et, en réponse au constat que l'exécution du plan opérationnel est exposée à un risque, ajuster le plan opérationnel.

10. Système de commande multicouche selon une revendication précédente quelconque, dans lequel les règles déterminées par la deuxième couche de commande concernent des nœuds individuels ou des groupes de nœuds.

11. Système de commande multicouche selon une revendication précédente quelconque, dans lequel la troisième couche de commande exécute la sélection et l'activation de nœuds individuels du système DES en réaction à un besoin d'activation d'un marché de réserve de réseaux électriques jusqu'à la couverture du besoin d'activation.

12. Système de commande multicouche selon une revendication précédente quelconque, dans lequel la troisième couche de commande est mise en œuvre dans des processus légers d'exécution.

13. Procédé mise en œuvre par ordinateur comprenant les étapes consistant à :
utiliser un système de commande multicouche pour la gestion d'un système de stockage d'énergie distribué, DES, dans lequel le système DES comprend plusieurs nœuds (121-125), chaque nœud comprenant une ou plusieurs unités de batterie;
dans lequel le système de commande multicouche comprend une première couche de commande (301), une deuxième couche de commande (302) et une troisième couche de commande (303), la première couche de commande étant mise en œuvre dans un environnement de calcul en nuage, et la deuxième couche de commande et la troisième couche de commande étant mises en œuvre dans un système de runtime sur un serveur local; le procédé comprenant les étapes consistant à :
effectuer dans la première couche de commande
- déterminer par avance un plan opérationnel pour le système DES pour plusieurs créneaux de temps d'une première période de temps sur la base de propriétés agrégées du système DES, le plan opérationnel comprenant une allocation de la capacité agrégée du système DES pour lesdits plusieurs créneaux de temps, et
- relayer le plan opérationnel à la deuxième couche de commande;
effectuer dans la deuxième couche de commande
- déterminer des règles pour la sélection de nœuds de l'agencement DES afin d'obtenir la capacité agrégée allouée;
- surveiller le fonctionnement de l'agencement DES en temps réel et ajuster les règles de manière réactive; et
- relayer les règles à la troisième couche de commande;
effectuer dans la troisième couche de commande
- exécuter la sélection et l'activation de nœuds individuels de l'agencement DES conformément aux règles.

14. Programme informatique comprenant un code de programme exécutable par ordinateur (23) pour amener un appareil à effectuer le procédé selon la revendication 13.
